(19) Europäisches Patentamt
European Patent Office
Office européen des brevets

(11) **EP 1 793 263 A1**

(12) **EUROPEAN PATENT APPLICATION**

(43) Date of publication:
**06.06.2007 Bulletin 2007/23**

(51) Int Cl.:
**G02F 1/1335** (2006.01)    *G02F 1/13357* (2006.01)
*G02B 5/02* (2006.01)

(21) Application number: **05257397.9**

(22) Date of filing: **01.12.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(71) Applicant: **Emphasis Materials, Inc.**<br>**Taipei (TW)**<br><br>(72) Inventor: **Chiang, Tien-Hon**<br>**Nei-hu**<br>**Taipei (TW)** | (74) Representative: **Gee, Steven William**<br>**D.W. & S.W. GEE,**<br>**1 South Lynn Gardens,**<br>**London Road**<br>**Shipston on Stour, Warwickshire CV36 4ER (GB)**<br><br>Remarks:<br>A request for correction of claim 35 and claim 39 has been filed pursuant to Rule 88 EPC. A decision on the request will be taken during the proceedings before the Examining Division (Guidelines for Examination in the EPO, A-V, 3.). |

(54) **Light intensity and/or colour distribution correcting element for an illumination system whose function is correlated to the incident light distribution**

(57) A light intensity and/or colour distribution correcting element (130) for an illumination system is designed to have its function correlated to the intensity or spectral distribution of light incident on the element. The correcting element performs at least one of three optical correction functions, namely diffusion, collimation, and color mixing. The spatial distribution of the processing power of the optical function corresponds to the intensity and/or spatial spectral distribution of the incident light. The light control device can also sequentially or synergetically combine two or more of the light control functions into a single device. At least one of the combined optical correction functions of the device is correlated to the intensity and/or spatial spectral distribution of the incident light to the device. The diffusive power is determined by the spatial haze distribution of the diffuser structures (120), while the degree of collimation is determined by the spatial distribution of the collimator microstructures (132). An anti-reflection layer or polarising layer (140) may also be incorporated into the element.

Such correcting elements may be used in displays (e.g. LCD) or in other lighting systems.

FIG. 5a

**Description**

BACKGROUND OF THE INVENTION

1. Field of the Invention

The present invention generally relates to light control devices, and more particularly to a device having combined light diffusing, collimating, and color mixing functions.

2. The Prior Arts

Conventionally, backlight units for liquid crystal displays (LCDs) or LCD TVs use cold cathode fluorescent lamps (CCFLs) or light emitting diodes (LEDs) as light source.

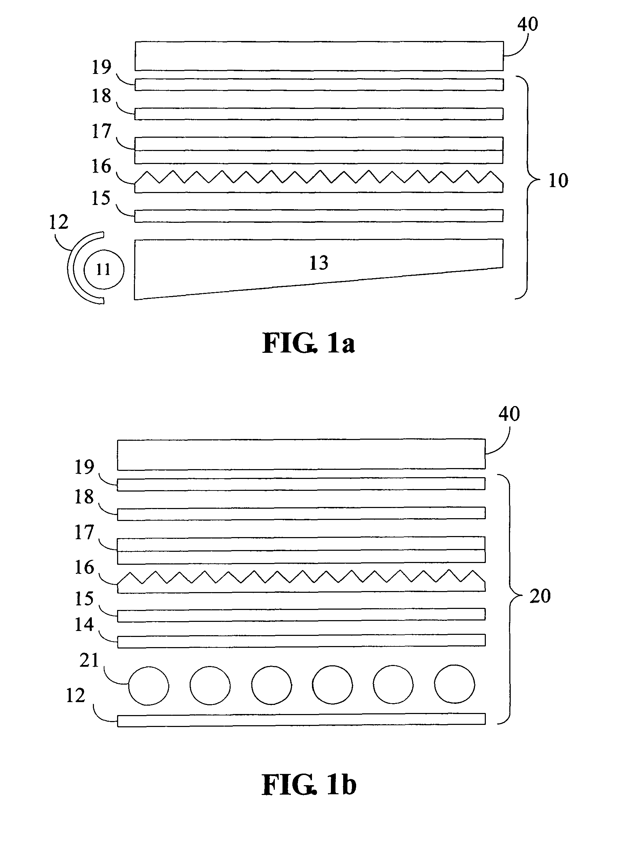

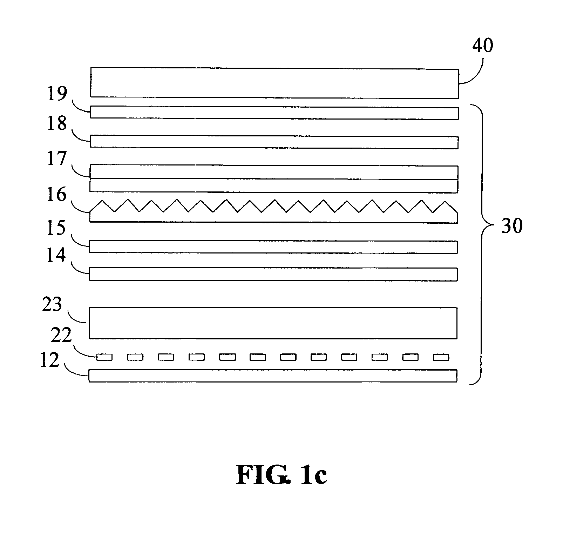

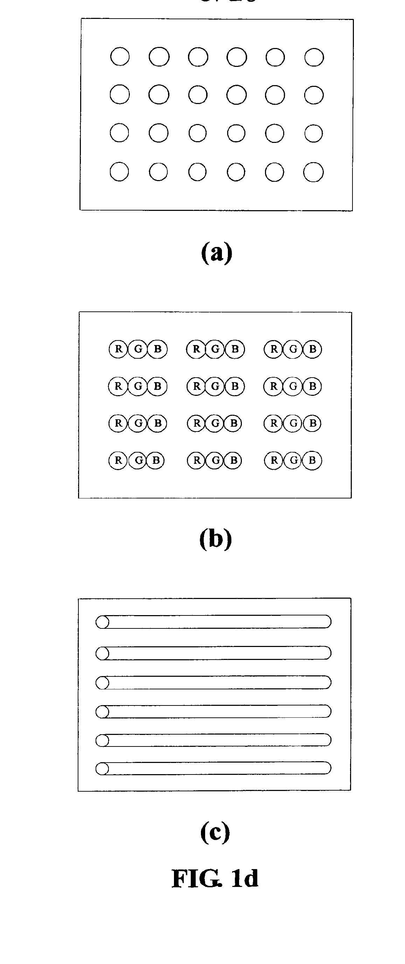

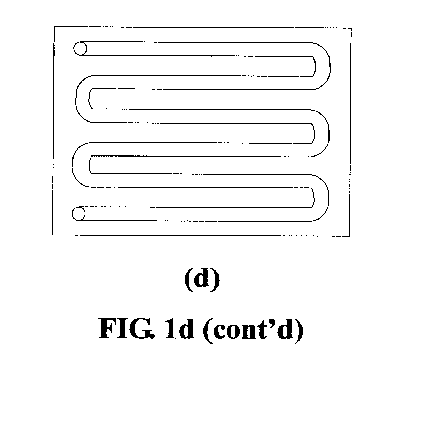

FIG 1a is a schematic side view showing a conventional edge-lit backlight unit 10. As shown in FIG. 1 a, light emitted from a CCFL or LEDs 11 of the backlight unit 10 is directed into a side of a light guide plate 13 with the help of a reflector 12 and then redirected to the back of the display panel 40 of a LCD. Between the light guide plate 13 and the display panel 40, there are usually configured with a diffusion sheet 15 for scattering the light from the light guide plate 13, two prism sheets 16 and 17 whose respective prism structures are aligned orthogonally for focusing the scattered light from the diffusion sheet 15 into substantially parallel light beams, an optional polarization or anti-reflection film or layer 18, and another diffusion sheet 19 to achieve further intensity uniformity of the light beams.

The diffusion sheet redirects light from one direction to many directions by scattering or refraction through embedded particles or rough surface. The prism sheet is a brightness enhancement optical film such as the Vikuiti™ BEF film provided by 3M Company or the Diaart™ prism sheet provided by Mitsubishi Rayon Co., Ltd. The polarization layer or film converts light from a lower degree of polarization to a higher degree of polarization. The polarization provided can be linear polarization, circular polarization, or elliptical polarization. For example, the Vikuiti™ DBEF film by 3M Company is one such linear polarization film. The anti-reflection layer or film prevents light transmission loss due to the reflection of light at the interface with different refractive indices.

The aforementioned edge-lit technique has a few disadvantages, especially for large-size LCDs in that the edge-lit backlight unit is unable to provide adequate light intensity, and large-size light guide plates are difficult to fabricate with practical cost and yield. Accordingly, most large-size LCDs adopt a direct-lit technique. FIG 1b is a schematic side view showing a conventional direct-lit backlight unit. As illustrated, multiple CCFLs 21 of the backlight unit 20 are arranged in parallel in front of the reflector 12 so as to direct light all toward the front of the reflector 12. Similarly, between the CCFLs 21 and the display panel 40, there are usually configured with the diffusion plate 14 and diffusion sheet 15, prism sheets 16 and 17, polarization or anti-reflection film or layer 18, and another diffusion sheet 19.

Besides using CCFLs as light source, LEDs can also be applied in direct-lit backlight unit, as shown in FIG 1c. These LEDs 22 could be all white-light LEDs, or these LEDs may be assortments of red-light, green-light, and blue-light LEDs. For the former, the backlight unit 30 would have a structure very similar to that shown in FIG. 1b. For the latter, an additional light mixing plate 23 is usually positioned in front of the diffusion plate 14, which provides multiple internal reflections so that the red, green, and blue lights from the LEDs are mixed to produce white light. However, the light mixing plate 23 usually provides a limited degree of light mixing so that additional distance between the light mixing plate 23 and the diffusion plate 14 is required to allow the residual red, green, and blue lights to further mix with each other as they propagate toward the diffusion plate 14. This, however, imposes a serious constraint on how thin the backlight unit could be achieved.

As could be seen from the foregoing illustrations, in an abstract sense, the reflector, the diffusion plate and sheets, the prism sheets, the light guide plate, the light mixing plate, and the polarization and anti-reflection film or layer are light control devices which manipulate, convert, or transform their incident light in one way or another into having the desired optical characteristics. From the view point of the display panel, what it requires is simply a planar light source having a high degree of intensity uniformity and brightness, and, for color displays, a desired color mixing delivering the required color features such as color temperature and optimal gamut mapping (Billmeyer and Saltzmain's Principles of Color Technology, 3rd Ed., Roy's Berns, John Wiley & Sons Inc). However, no matter how brilliant they are arranged, the limitation inherent in linear light sources such as CCFLs and point light sources such as LEDs simply prohibit them to provide the planar light required by the display panel and, therefore, all the aforementioned light control devices are introduced to make up the discrepancy.

As LCDs have become the mainstream display technology, a very large number of techniques for various kinds of light control devices have been disclosed in the related arts such as, just to name a few of them with respect to diffusion or prism sheets, U.S. Patent Nos. 6,280,063 B1, 6,322,236 B1, 6,570,710 B1, 6,845,212 B2. The objectives of these light control devices could be generally categorized into two categories: (1) to achieve superior intensity uniformity by diffusing or scattering light into various directions; and (2) to achieve brightness enhancement by focusing or collimating light beams into a proper viewing angle (that is, the maximum angle at which the minimum contrast of an image can be viewed). These light control devices are generally effective but, unfortunately, only to a certain degree, mostly because they process the incident light regardless of its intensity distribution while, in fact, the incident light has a significantly non-uniform distribution of light intensity as it enters the devices through the light incidence planes of these devices. The distribution or the variations of light intensity over a plane or surface (e.g., the light incidence plane) in space is referred to as "spatial intensity distribution" hereinafter throughout this specification.

To explain how the non-uniform spatial intensity distribution is resulted, FIG. 1d provides schematic front views to a number of scenarios of light source arrangement in a direct-lit backlight unit. The diagram (a) of FIG. 1d is a typical array arrangement of white-light LEDs, the diagram (b) of FIG 1d is a typical arrangement of red-light (R), green-light (G), and blue-light (B) LEDs, and the diagrams (c) and (d) are two configurations of the CCFLs. As should be obvious from FIG. 1d, due to the planar arrangement of a limited number of the point light sources such as LEDs, or linear light sources such as CCFLs, it is inevitable to have some significantly non-uniform spatial intensity distribution on the light incidence plane of a light control device arranged in front of one of these light sources.

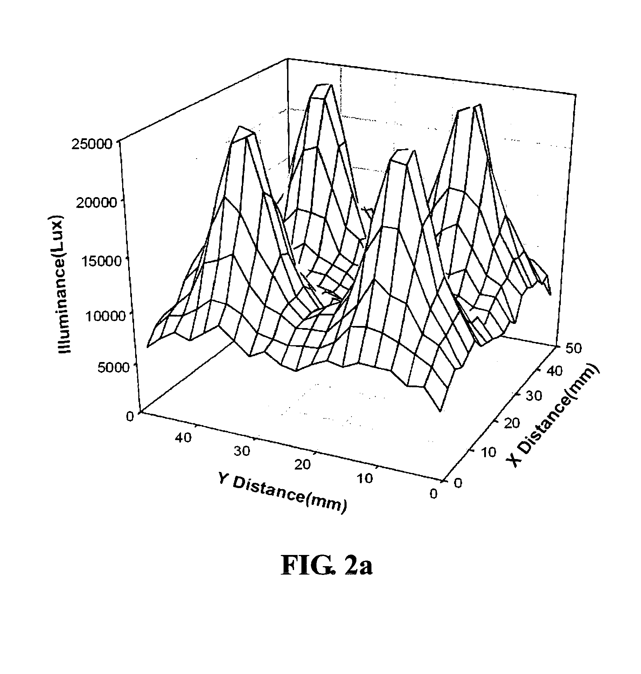

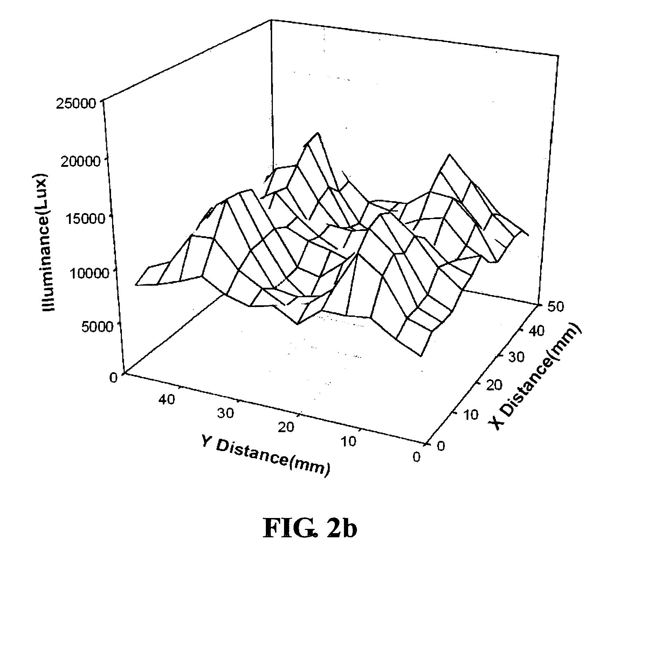

To illustrate this non-uniform spatial intensity distribution, a simulation is conducted by having four evenly spaced white-light LEDs on a 50mm × 50mm plane in front of a reflector, just like that of a miniature, ordinary direct-lit backlight unit as illustrated in FIG 1d (a). Each of the LEDs has a 4-mm radius and a luminous flux of 8 lumen, and the reflector has a reflection efficiency of 98%. FIG 2a is a 3D presentation of the calculated illuminance of the miniature light source over a 50mm × 50mm surface. As can be seen from FIG 2a, four sharp spikes are formed around the four LEDs. However, without regarding to the spatial intensity distribution of the light source, the conventional light control techniques process their incident light regardless of the light intensity. The result is that the sharp spikes are indeed smoothed out but only to a limited extent as shown in FIG 2b and, therefore, additional light control devices are employed as shown in FIGS. 1a~1c. This, inevitably, causes a great deal of power loss as the light propagates through the light control devices. Then, a sophisticated heat dissipation design is required to ventilate the heat produced from the excessive power loss. The scenario does not stop here as, to make up the loss power, additional light control devices are introduced for brightness enhancement which, in turn, adds up the product cost. In addition, as the lighting efficiency of LEDs is continuously advanced and thereby a less number of LEDs are required, the non-uniform spatial intensity distribution and the inadequacy of conventional light control devices are even more obvious.

Furthermore, for direct-lit backlight units based on assortments of red-light, green-light, and blue-light LEDs, due to the color and the variations of the manufacturing process, each of the LEDs inevitably exhibits a specific spectral profile (i.e., a profile of the light intensity at each wavelength in the interested wavelength band). Then, depending on how these LEDs are arranged, the incident light to a light control device has a specific distribution of spectral profile from color-mixing the various colored lights of the LEDs on the device's light incidence plane. The distribution or the variations of spectral profile over a surface or plane in space is referred to as "spatial spectral distribution" hereinafter throughout this specification. None of the conventional light control devices has addressed the problem of shaping or transforming its incident light's spatial spectral distribution into a desired spatial spectral distribution of the LCD. Conventionally, this problem is left to the bulky light mixing plate alone and/or complex color sensing elements and circuits to solve and, as a result, the thickness of LCD is hard to reduce.

SUMMARY OF THE INVENTION

Accordingly, the present invention is to provide a light control device for use with a light source unit to obviate the foregoing shortcomings of the conventional approaches. A major objective of the present invention is to achieve a very high degree of intensity uniformity within a proper viewing angle without the use of excessive and multiple diffusing and focusing mechanisms. As such, the problems associated with complicated manufacturing process, high product cost, excessive light power loss, and extraneous heat dissipation could all be resolved satisfactorily, if not entirely, through the present invention's multi-function integration and reduced material usage. Another major objective of the present invention is to help shaping the desired spatial spectral distribution for the target application from the red, green, and blue lights of the light source unit. As such, a less complicated light mixing mechanism could be used and the thickness of the backlight unit as well as power consumption of the LCD could be reduced profoundly.

To achieve the foregoing objectives, the light control device of the present invention is positioned on the path of light from the light source unit. The light control device provides at least one of the light control functions, namely the diffusion, collimation, and color mixing. However, instead of processing the incident light regardless of its intensity distribution as in the conventional approaches, the light control function provided by the light control device, be it diffusing, collimating, or color mixing, has a spatial distribution of its processing power corresponding to a spatial intensity distribution and/or spatial spectral distribution of the incident light.

The light control device of the present invention could also combine two or more of the light control functions into a single device. However, this is not a simple stacking of multiple conventional light control devices. At least one of the light control functions of the present invention, most importantly, has a spatial distribution of its processing power corresponding to a spatial intensity distribution and/or the spatial spectral distribution of its incident light. In one embodiment of the present invention, the light control device contains a transparent substrate having a diffuser structure, a collimator structure, and a color mixing structure. The diffuser structure is arranged across the light incident plane which scatters the incident light in all directions so as to achieve a high degree of uniformity. The diffuser structure has a spatial distribution in terms of the degree of haze corresponding to the spatial intensity distribution of the incident light on the light incidence plane. In other words, at a position on the light incidence plane, the diffuser structure there has a higher (or lower) degree of haze if the light intensity at the position is stronger (or weaker).

In this embodiment, the collimator structure is arranged on the light emission plane (i.e., where light is emitted out of the device) which directs the scattered light from the diffuser structure into substantially collimated light beams within a proper viewing angle so as to enhance the luminance of the light emitted from the device. The collimator structure contains a number of microstructures and the microstructures could have a spatial distribution in terms of their geometric properties and/or refractive indices corresponding to the spatial intensity distribution of (1) the incident light on the light incidence plane (i.e., the light to the light control device), or (2) the incident light on the light emission plane (i.e., the light to the collimator structure which is also the light emitted from the preceding diffuser structure). In other words, the microstructure at a position on the light emission plane has specific geometric properties and/or a specific refractive index if the light incident to the light incident plane (i.e., to the light control device) has a specific intensity at a position on the light incidence plane corresponding to that position on the light emission plane. Or, the microstructure has specific geometric properties and/or a specific refractive index at that specific position on the light emission plane if the light incident to the light emission plane (i.e., to the microstructures) has a specific light intensity at that position.

In this embodiment, the color mixer structure contains additives dispersed in the diffuser structure, collimator structure, or both. The additives may include appropriate dyes and/or pigments for color intensity absorption, nano/micro particles for light scattering, or phosphors and/or fluorescent materials for light absorption and reemission. In an alternative embodiment, these dyes, pigments, nano/micro particles, phosphors, and/or fluorescent materials could be mixed with adequate resin and coated on the light emission plane as a separate coating layer. The distribution of the additives may depend on a spatial spectral distribution over an appropriate range of wavelength of (1) the incident light on the light incidence plane (i.e., the light to the light control device), or (2) the incident light on the light emission plane (i.e., the light to the color mixing structure). The dyes, pigments, nano/micro particles, phosphors, and/or fluorescent materials of the color mixing structure shift, transform, or convert the spatial spectral distribution of the incident colored light to match a desired spatial spectral distribution over the range of wavelength so that a better color mixing could be achieved for the target application of the light control device.

The light control device could be adopted in various applications in addition to being integrated as part of the backlight unit of a LCD display. The light control device could also be integrated with various types of lighting devices such as table or floor lamps where a light source unit having a non-uniform spatial intensity distribution is involved and where better color-mixed, uniform and collimated light beams are to be achieved.

The foregoing and other objects, features, aspects and advantages of the present invention will become better understood from a careful reading of a detailed description provided hereinbelow with appropriate reference to the accompanying drawings.

BRIEF DESCRIPTION OF THE DRAWINGS

FIG 1a is a schematic side view showing a conventional edge-lit backlight unit.

FIG 1b is a schematic side view showing a conventional direct-lit backlight unit utilizing CCFLs.

FIG 1c is a schematic side view showing a conventional direct-lit backlight unit utilizing LEDs.

FIG 1d provides schematic front views to a number of scenarios of light source arrangement in a direct-lit backlight unit.

FIG 2a is a 3D presentation of the calculated illuminance of a miniature light source unit containing four LEDs over a 50mm × 50mm surface

FIG 2b is a 3D presentation of the calculated illuminance of the light from the miniature light source unit of FIG 2a after it has passed through a conventional prism sheet.

FIG 2c is a schematic side view of a light control device according to the present invention used in the simulations of FIG 2d.

FIG 2d is a 3D presentation of the calculated illuminance of the light from the miniature light source unit of FIG 2a after it has passed through the light control device of FIG 2c.

FIG. 3a is schematic model showing the light control devices of a conventional backlight unit arranged in parallel along the Z-axis of a Cartesian coordinate system.

FIG 3b is a schematic model showing a conventional diffusion sheet laid on the X-Y plane of a coordinate system and scattering an incident light beam propagating along the Z-axis.

FIGS. 4a~4e are schematic side views showing various application scenarios of the present invention in LCDs.

FIGS. 5a~5e are schematic side views showing various variations of a first embodiment of the light control device according to the present invention.

FIGS. 6a~6e are schematic front views showing various spatial patterns of the diffuser structure according to the present invention.

FIGS. 7a and 7b are schematic side views showing an anti-reflection layer or a polarization layer integrated with the first embodiment of the light control device of the present invention.

FIGS. 8a and 8b are schematic side views showing other variations of the first embodiment of the light control device of the present invention.

FIG 9 is a schematic view of a portion of the light incident plane where different colored areas are formed by a red-light, a green-light, and a blue-light LED.

FIGS. 10a, 10b, and 10c are schematic side views showing other embodiments of the light control device according to the present invention.

FIGS. 11a and 11b are schematic side views showing various approaches in obtaining the diffuser structure's spatial pattern.

FIGS. 12a~12c are schematic diagrams showing the effects of dyes/pigments, phosphors/fluorescent materials, and nano/micro particles on spectral profile respectively.

DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

The present invention provides a novel light control device which combines at least one of the light diffusing, collimating, and color mixing functions, and, at least one of the functions has a spatial distribution of its processing power configured corresponding to a spatial intensity distribution and/or a spatial spectral distribution of the incident light. A number of terms used throughout this specification have the following defined meanings:

**Combination**      The integration of at least two light control functions. The integrated functions are said to be "directly combined" if they are independent of each other. Two integrated functions are said to be "interactively combined" if one function is dependent upon the output of the other function.

**Diffusing**      The process of changing of the angular distribution of a beam of radiant flux by a transmitting material or a reflecting surface such that flux incident in one direction is continuously distributed in many directions (ASTM E284). The term "diffusing" is used interchangeably with the term "scattering."

**Collimating**      The process of minimizing divergence and convergence to make the light beams as parallel as possible. The term "collimating" is used interchangeably with the term "focusing."

**Color mixing**      The combination of the light of "primary" colors (red, green, and blue) to make colors in according with CIE 1931 standard.

**Spatial distribution**      The schematic arrangement of a particular feature in space.

**Uniformity**      Uniformity of a feature is the ratio of the minimum and the average value of the feature (e.g., when the ratio is close to 1, it is said to be substantially uniform and, when the ratio is close to 0, it is said to be substantially non-uniform).

To explain the idea behind the present invention, using the edge-lit backlight unit shown in FIG. 1a as example, each of the light control device could be considered mathematically as an operator $\hat{M}$ using Jones/Muller-like matrix (S. Huard, Polarization of Light, John Wiley & Sons, New York, 1997) expression transforming the incident light to the device into the emitted light from the device. For example, assuming that $\tilde{E}_{in}$ represents the light emitted from the light guide plate 13 and $\tilde{E}_{out}$ represents the light emitted to display panel 40 by the diffusion sheet 19, the relationship between $\tilde{E}_{in}$ and $\tilde{E}_{out}$ could be expressed as:

$$\tilde{E}_{out} = \hat{M}_{19}\hat{M}_{18}\hat{M}_{17}\hat{M}_{16}\hat{M}_{15}\tilde{E}_{in}$$

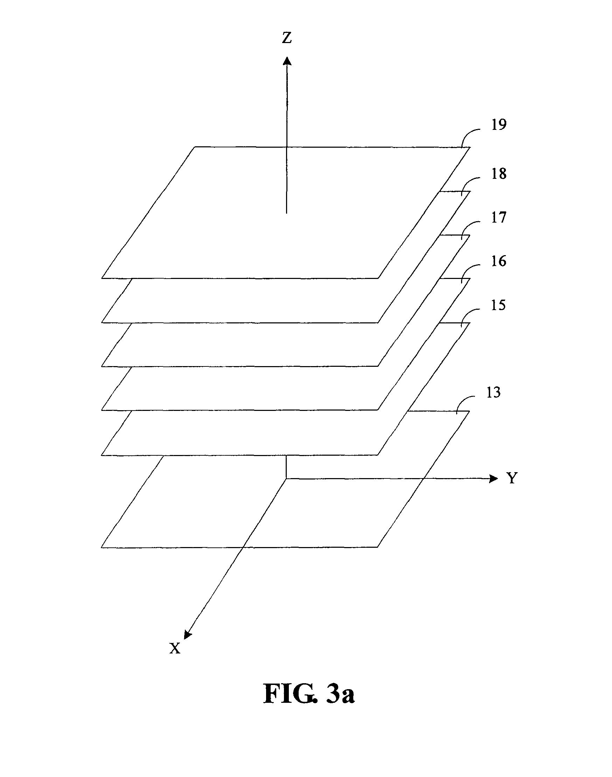

where $\hat{M}_{ij}$ is the operator representing the light control function provided by the light control device $ij$ (i=1, j=1 to 9). For example, $\hat{M}_{15}$ represents the function of the diffusion sheet 15. To facilitate the subsequent description, these devices could be imagined to be positioned in parallel along the Z-axis of a Cartesian coordinate system as illustrated in FIG 3a in which, for simplicity sake, the thickness of the devices is ignored.

The meaning of the operator $\hat{M}$ is explained as follows using the diffusion sheet 15 as an example. A conventional diffusion sheet such as the diffusion sheet 15 provides the diffusing or scattering function achieved by a number of means such as surface roughness and a coating of appropriate material, just to name a few. No matter how it is achieved, the diffusing or scattering function at a position $(x, y, z)$ of the diffusion sheet 15 as shown in FIG 3a could be generally characterized by a degree of haze $h(x, y, z)$ as defined by the American Standard Test Method (ASTM) E284. Again, for simplicity sake, the Z coordinate is ignored, reducing $h(x, y, z)$ to $h(x, y)$. In addition, since the distribution of the $h(x, y)$ for most conventional diffusion sheets is essentially uniform, the distribution of $h(x, y)$ is further simplified to a constant $h$. With the foregoing simplification, the operator $\hat{M}_{15}$ could be considered a process transforming a beam of the incident light $\tilde{E}_{in-15}$ into the diffusion sheet 15 with an incident angle $\theta_i$ into a beam with a polar angle $\theta_r$ and an azimuthal angle $\varphi_r$. Therefore, the relationship between the incident light $\tilde{E}_{in-15}$ and the emitted light $\tilde{E}_{out-15}$ could be expressed as:

$$\tilde{E}_{out-15}(\theta_r, \varphi_r) = \hat{M}_{15}(h)\,\tilde{E}_{in-15}(\theta_i)$$

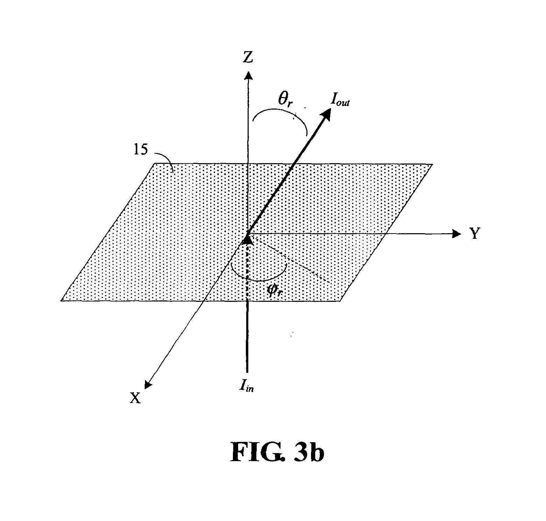

To give better understanding of the above formula, FIG 3b is a schematic perspective view showing a conventional diffusion sheet on the X-Y plane of a Cartesian coordinate system and scattering an incident light beam propagating along the Z-axis. In the illustration, the incident light beam $I_{in}$ represents a portion of $\tilde{E}_{in-15}(\theta_i=0)$, and the scattered light beam $I_{out}$ represents a portion of $\tilde{E}_{out-15}(\theta_r, \varphi_r)$ where $\theta_r$ is the included angle between $I_{out}$ and Z-axis while $\varphi_r$ is the included angle between the projection of $I_{out}$ on the X-Y plane and the X-axis. More specifically, the degree of haze $h$ alone determines the scattering function of the operator $\hat{M}_{15}$. This is why it is mentioned earlier that the conventional diffusion sheets process the incident light regardless of the intensity distribution. Please note that some conventional diffusion sheets have the degree of haze varied in a predetermined or random manner and therefore $h(x, y)$ is not a constant. In this way, the foregoing formula would become:

$$\tilde{E}_{out-15}(x, y, \theta_r(x, y), \varphi_r(x,y)) = \hat{M}_{15}(x, y, h(x, y))\,\tilde{E}_{in-15}(x, y, \theta_i(x, y))$$

However, despite that $h(x, y)$ indeed has some form of distribution, $h(x, y)$ still has no correlation to the light intensity at the position $(x, y)$ and the incident light is still processed regardless of its intensity distribution.

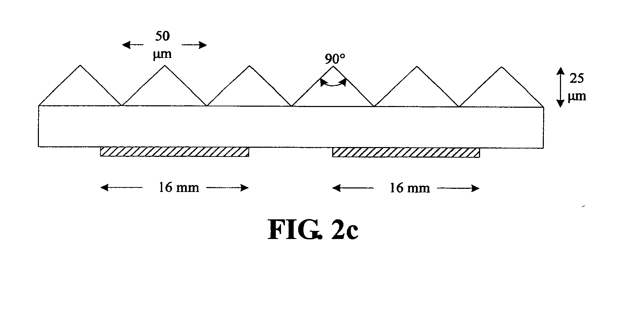

The emitted light $\tilde{E}_{out-15}$ then propagates and becomes the incident light $\tilde{E}_{in-16}$ to the prism sheet 16, which is confined to a viewing angle $\theta_v$ when exits from the prism sheet 16. A conventional prism sheet such as the prism sheet 16 provides the collimating or focusing function achieved by the microstructures configured on the prism sheet. The collimating or focusing function at a position $(x, y, z)$ of the prism sheet 16 as shown in FIG 3a could be generally characterized by a parameter $m(x, y, z)$. Using FIG 2c as an example, the parameter $m(x, y, z)$ is an abstraction of the collimating or focusing capability determined by the geometric properties such as the shape of the microstructure, and the height (e.g., 25 $\mu$m), vertex angle (e.g., 90°), and width (i.e., 50 $\mu$m) of the prism-shaped microstructure at the position $(x, y, z)$. Again, for simplicity sake, the Z coordinate is ignored, reducing $m(x, y, z)$ to $m(x, y)$. In addition, since the shape and the arrangement of the microstructures are essentially regular for conventional prism sheets, contributing to a rather uniform distribution of the parameter $m(x, y)$, $m(x, y)$ is further simplified to a constant m when the size of the device is sufficiently large. With the foregoing simplification, the relationship between the incident light $E_{in-16}$ and the emitted light $\tilde{E}_{out-16}$ could be expressed as:

$$\tilde{E}_{out-16}(\theta_v, \varphi'_r) = \hat{M}_{16}(m)\,\tilde{E}_{in-16}(\theta_r, \varphi_r)$$

where $\varphi'_r$ and $\varphi_r$ are not necessarily the same. Again, the parameter m alone determines the focusing function of the

operator $\hat{M}_{16}$. This is why it is mentioned earlier that the conventional prism sheets process the incident light regardless of the intensity distribution. Please note that some conventional prism sheets have the microstructures with different geometric properties randomly arranged and therefore $m(x, y)$ is not a constant. In this way, the foregoing formula would become:

$$\tilde{E}_{out\text{-}16}(x,\, y,\, \theta_v(x,\, y),\, \varphi'_r(x,\, y)\,) =$$

$$\hat{M}_{16}(x,\, y,\, m(x,\, y))\, \tilde{E}_{in\text{-}16}(x,\, y,\, \theta_r(x,\, y),\, \varphi_r(x,\, y))$$

However, despite that $m(x, y)$ indeed has some form of distribution, $m(x, y)$ still has no correlation to the light intensity at the position $(x, y)$ and the incident light is still processed regardless of its intensity distribution.

However, as mentioned earlier, since all current light source units cannot provide a true planar light, a light control device would inevitably perceive a non-uniform spatial intensity distribution up to certain extent as the light from a light source unit entering the light control device. Therefore, instead of processing the incident light regardless of its spatial intensity and/or spectral distribution as in the conventional approaches, the light control device proposed by the present invention contains at least one of the following light control functions: diffusion (or scattering), collimation (or focusing), and color mixing, and the light control function has a spatial distribution of its processing power corresponding to the spatial intensity distribution and/or the spatial spectral distribution of the incident light. Again, assuming the light control device of the present invention is positioned along the Z-axis parallel to the X-Y plane of a Cartesian coordinate system similar to that of FIG 3a, and again ignoring the Z coordinate, the light incident to the light control device would have a spatial intensity distribution $\tilde{E}_{in\text{-}LCD}$ and/or a spatial spectral distribution $\lambda_{in\text{-}LCD}$ on, for example, the light incident plane, where the subscript $LCD$ stands for "Light Control Device." In the following, the light intensity and the spectral profile at a position $(x, y)$ are expressed as $\tilde{E}_{in\text{-}LCD}(x, y)$ and $\lambda_{in\text{-}LCD}(x, y)$ respectively. The spatial spectral distribution and the spectral profile will be described in more details later.

For example, a light control device of the present invention having combined diffusing and collimating functions to replace the diffusion sheet 15, and the prism sheets 16 and 17 of FIG. 1a. Then, the relationship between $\tilde{E}_{in}$ and $\tilde{E}_{out}$ of FIG. 1a could be expressed in a simplified manner as:

$$\tilde{E}_{out} = \hat{M}_{19}\,\hat{M}_{18}\,\hat{M}_{LCD}\,\tilde{E}_{in}$$

where $\hat{M}_{LCD}$ is the operator representing the light control function provided by the light control device of the present invention. However, please note that $\hat{M}_{LCD} \neq \hat{M}_{17}\hat{M}_{16}\hat{M}_{15}$ (i.e., a simple stacking of the conventional diffusion sheet 15, and prism sheets 16 and 17). For this example, $\hat{M}_{LCD}$ could be expressed as:

$$\hat{M}_{LCD}\,(x,\, y,\, h(x,\, y),\, m(x,\, y)) =$$

$$\hat{M}_{collimator}\,(x,\, y,\, m(x,\, y))\,\ \hat{M}_{diffuser}\,(x,\, y,\, h(x,\, y))$$

The combined diffusing function is represented by the operator $\hat{M}_{diffuser}$ and the combined collimating function is represented by the operator $\hat{M}_{collimator}$. More specifically, the degree of haze $h(x, y)$ and the collimating capability $m(x, y)$ at a position $(x, y)$ are both functions of the light intensity at the position $(x, y)$, $\tilde{E}_{in\text{-}LCD}(x, y)$:

$$h(x,\, y) = f_h\,(\tilde{E}_{in\text{-}LCD}(x,\, y))$$

$$m(x,\, y) = f_m\,(\tilde{E}_{in\text{-}LCD}(x,\, y))$$

In other words, the degree of haze and the collimating capability have spatial distributions corresponding to the spatial intensity distribution of the incident light on the light incidence plane of the light control device.

Based on the same model, different types of light control devices of the present invention could be represented, just to give a few examples, as follows:

$$\hat{M}_{LCD}(x, y, h(x, y)) =$$

$$\hat{M}_{17}\hat{M}_{16}\ \hat{M}_{diffuser}(x, y, h(x, y))$$

where a diffusing function tailored for the spatial intensity distribution of the incident light is combined with the conventional collimating functions provided by the prism sheets 16 and 17, or

$$\hat{M}_{LCD}(x, y, m(x, y)) =$$

$$\hat{M}_{collimator}(x, y, m(x, y))\ \hat{M}_{15}$$

where a collimating function tailored for the spatial intensity distribution of the incident light is combined with the conventional diffusing function provided by the diffusion sheet 15. Please also note that the light control device could also contain only the diffusing or collimating function as follows:

$$\hat{M}_{LCD}(x, y, h(x, y)) =\ \hat{M}_{diffuser}(x, y, h(x, y)),$$

or

$$\hat{M}_{LCD}(x, y, m(x, y)) =\ \hat{M}_{collimator}(x, y, m(x, y))$$

Even though the foregoing discussion didn't cover the color mixing function, one could easily image and extend the mathematical model above to the color mixing function. For example, a light control device containing only the color mixing function that corresponds to the spatial spectral distribution of the incident light could be expressed as follows:

$$\hat{M}_{LCD}(x, y, a(x, y)) =$$

$$\hat{M}_{color\text{-}mixer}(x, y, a(x, y))$$

and

$$a(x, y) = f_a(\lambda_{in\text{-}LCD}(x, y))$$

where $a(x, y)$ is an abstraction of the color mixing capability achieved by appropriate dyes, pigments, nano/micro particles, phosphors, and/or fluorescent materials at the position $(x, y)$, and $a(x, y)$ is a function of the spectral profile at the position $(x, y)$, $\lambda_{in\text{-}LCD}(x, y)$. More details about the color mixing function will be given later.

The foregoing model could be extended to include other parameters of the light control functions. For example,

$$\hat{M}_{LCD}\ (x,\ y,\ h(x,\ y),\ RI(x,\ y),\ m(x,\ y)) =$$

$$\hat{M}_{collimator}\ (x,\ y,\ RI(x,\ y),\ m(x,\ y))\ \ \hat{M}_{diffuser}\ (x,\ y,\ h(x,\ y)),$$

and

$$RI(x,\ y) = f_{RI}\ (\tilde{E}_{in\text{-}LCD}(x,\ y))$$

where *RI* stands for the refractive index of the material used for the microstructure formation. As should be well known to people skilled in the related art, a higher *RI* is able to collimate and confine light beams into a narrower viewing angle. For another two examples,

$$\hat{M}_{LCD}\ (x,\ y,\ h(x,\ y),\ RI(x,\ y),\ m(x,\ y),\ a\ (x,\ y)) =$$

$$\hat{M}_{collimator}\ (x,\ y,\ RI(x,\ y),\ m(x,\ y))\ \ \hat{M}_{diffuser}\ (x,\ y,\ h(x,\ y),\ a\ (x,\ y))$$

where the color mixing function is integrated with the diffusing process, and

$$\hat{M}_{LCD}\ (x,\ y,\ h(x,\ y),\ RI(x,\ y),\ m(x,\ y),\ a\ (x,\ y)) =$$

$$\hat{M}_{collimator}\ (x,\ y,\ RI(x,\ y),\ m(x,\ y),\ a\ (x,\ y))\ \ \hat{M}_{diffuser}\ (x,\ y,\ h(x,\ y))$$

where the color mixing function is integrated with the collimating process. What the above two formulas suggest is that the diffusion process, or the collimating process, or both could incorporate the color mixing function to transform the spectral profile $\lambda_{in\text{-}LCD}(x,\ y)$ at any position *(x, y)* so that a desired spatial spectral distribution required by the lighting application could be achieved. In the following, exemplary embodiments about such integration will be described in more details.

Please note that the above mentioned diffusing, collimating and color mixing functions are individually corresponding to the same spatial intensity and/or spectral distribution of the incident light on, for example, the light incidence plane. This is referred as a "direct combination" of the light control functions. The light control device of the present invention could also "interactively combine" two or more of the light control functions. The interactive combination of light control functions have their processing powers spatially distributed correspondingly to the output of the preceding light control function along the path of light. As such, using the above two formulas as example, an interactive combination operator $\otimes$ is introduced as follows:

$$\hat{M}_{LCD}\ (x,\ y,\ h(x,\ y),\ RI(x,\ y),\ m(x,\ y),\ a\ (x,\ y)) =$$

$$\hat{M}_{collimator}\ (x,\ y,\ RI(x,\ y),\ m(x,\ y))\ \ \otimes$$

$$\hat{M}_{diffuser}\ (x,\ y,\ h(x,\ y),\ a(x,\ y))$$

and

$$\hat{M}_{LCD}\ (x,\ y,\ h(x,\ y),\ RI(x,\ y),\ m(x,\ y),\ a\ (x,\ y)) =$$

$$\hat{M}_{collimator}\ (x,\ y,\ RI(x,\ y),\ m(x,\ y),\ a\ (x,\ y))\ \ \otimes$$

$$\hat{M}_{diffuser}\ (x,\ y,\ h(x,\ y))$$

The symbol $\otimes$ means that, for a light control function (i.e., diffusion in this example) in front of another light control function (i.e., collimation in this example) along the path of light, the latter light control function could have its light control power spatially distributed correspondingly to a spatial intensity distribution produced by the light output from the former. More specifically, the diffusing function $\hat{M}_{diffuser}$ is configured correspondingly to the spatial intensity distribution $\tilde{E}_{in\text{-}LCD}$ of the incident light into the light control device; while the $\hat{M}_{collimator}$ could be configured correspondingly either to $\tilde{E}_{in\text{-}LCD}$ (i.e., in a direct combination scenario), or to the spatial intensity distribution $\tilde{E}_{out\text{-}diffuser}$ of the light output by the diffusing function (i.e., in an interactive combination scenario).

Please note that the foregoing model could be extended to directly combine other conventional light control functions such as a polarizer and anti-reflection coating. For example, a light control device of the present invention could combine the diffusion sheets 15 and 19, the prism sheets 16 and 17, and the polarization or anti-reflection film or layer 18 of FIG 1a. Then, the relationship between $\tilde{E}_{in}$ and $\tilde{E}_{out}$ could be expressed as:

$$\tilde{E}_{out} = \ \hat{M}_{LCD}\ \tilde{E}_{in}$$

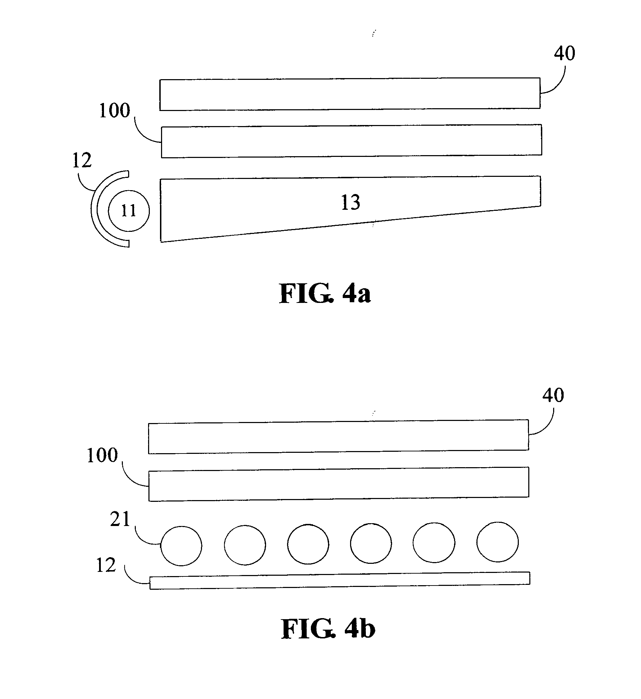

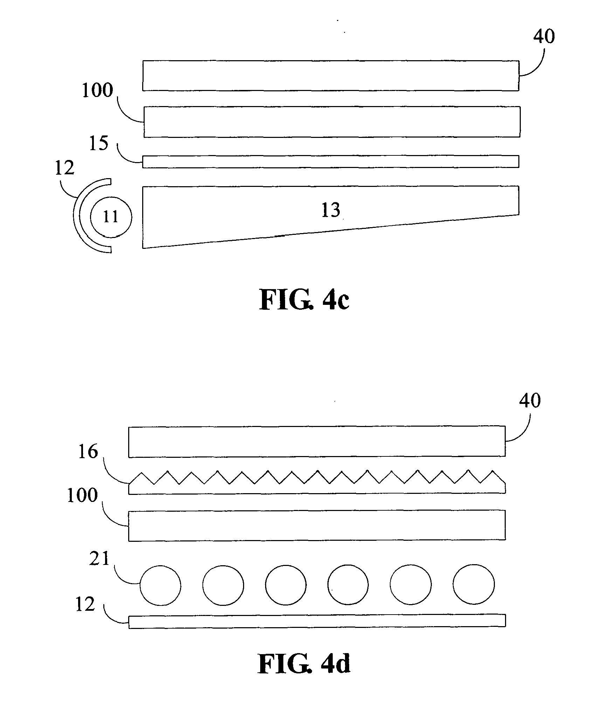

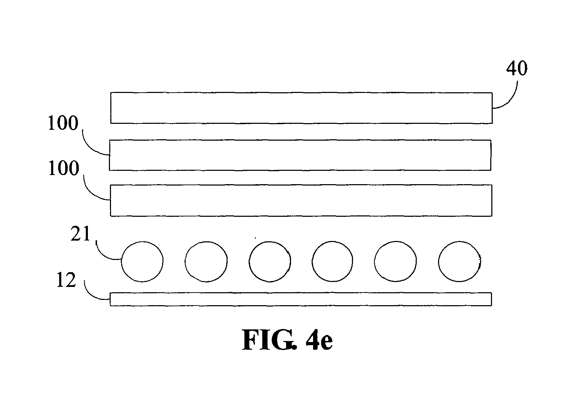

In the following, the above described model is applied in various embodiments of the present invention. As a brief summary, the present invention covers (1) a light control device containing one of the three major light control functions: diffusing function, collimating function, and color mixing function, which is tailored to the spatial intensity and/or spectral distribution of the incident light, and (2) a light control device combining two or more light control functions and at least one of them is tailored to the spatial intensity and/or spectral distribution of the incident light to the light control device (i.e., in a direct combination scenario) or of its own incident light (i.e., in an interactive combination scenario). As there are a very large number of combinations and these combinations cannot be exhausted completely, for simplicity, only some exemplary embodiments are discussed as follows and the implementation details covered by these embodiments could be extended to those embodiments not covered here. FIGS. 4a and 4b are schematic side views showing the light control device 100 of the present invention applied in LCDs utilizing edge-lit and direct-lit backlight units respectively. As illustrated and in comparison to FIGS. 1a, 1b and 1c, the light control device 100 is positioned in the path of the light from the CCFLs 11, 21 or LEDs 22 to the back of the display panel 40, entirely replacing the conventional light control devices. In some other application scenarios such as those illustrated in FIGS. 4c and 4d, the light control device 100 of the present invention could also be combined with one or more diffusion sheets 15 or diffusion plates, or with one or more prism sheets 16 or other type of brightness enhancement films, or both. FIG 4e is yet another application scenario where two or more of the light control devices 100 are employed together in a direct-lit backlight unit. Besides being integrated as part of the backlight unit of a LCD as shown in FIGS. 4a~4e, the light control device of the present invention could actually be integrated with other lighting devices such as various kinds of lamps for converting the light from a non-uniform light source unit of these lighting devices into collimated light beams having a high degree of uniformity and a desired spatial spectral distribution.

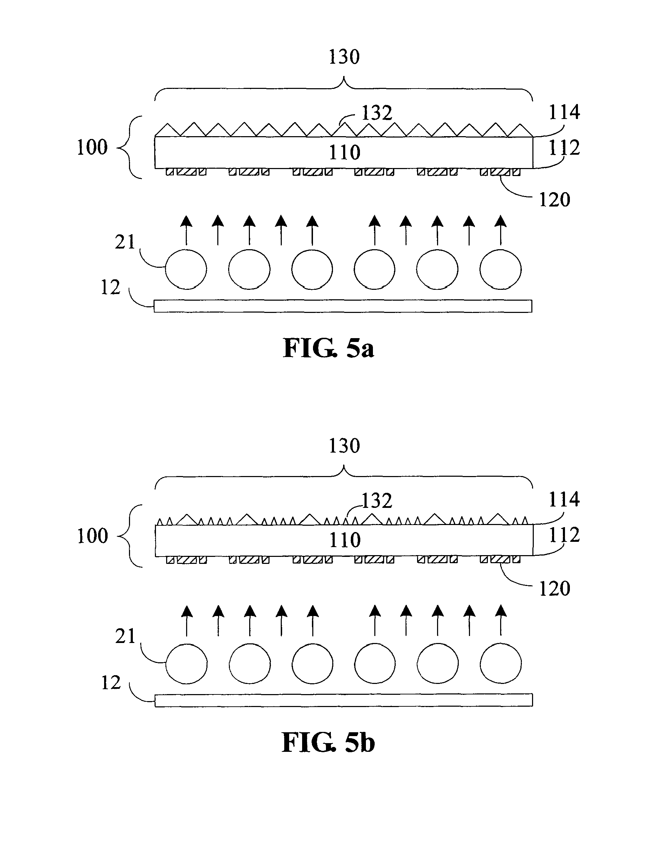

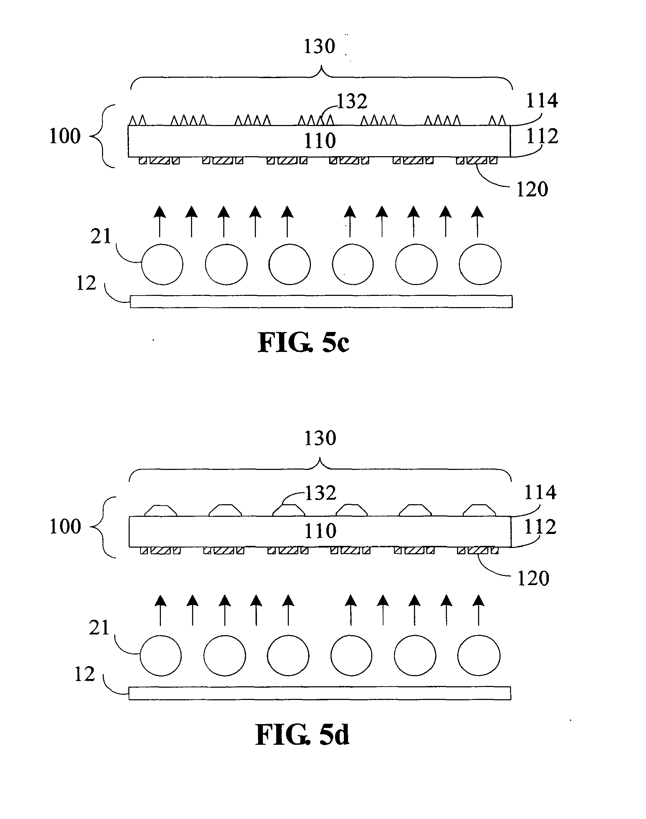

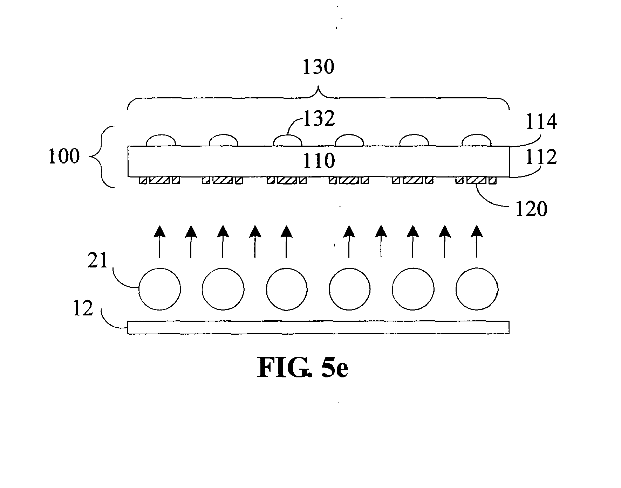

FIGS. 5a~5e are schematic side views showing a number of variations of a first embodiment of the light control device according to the present invention. As illustrated, the present embodiment mainly contains a transparent substrate 110 made of polymer, copolymer, composite, or glass material, which has over 70% total light transmittance in the wavelength of 420~680 nm region. However, the present invention does not impose a specific requirement on the transparency of the substrate 110. The substrate 110, positioned on the path of the light from a light source unit made of CCFLs 21 and the reflector 12, has a light incidence plane 112 through which the light from the light source unit enters the substrate 110, and a light emission plane 114 opposite to the light incidence plane 112 and through which the light leaves the substrate 110. On the light incidence plane 112, a diffuser structure 120 is configured to scatter the incident light into various directions. The diffuser structure 120 has a spatial pattern in terms of the degree of haze (generally, between 3%~95%) and the spatial pattern is arranged correspondingly to the spatial intensity distribution of the incident light on the light incidence plane 112, covering 1%~99% of the area of the light incidence plane 112. In other words, at positions where the light intensity is stronger, the diffuser structure 120 has a higher degree of haze (i.e., scattering light more intensively) at these positions. Please note that, if the light control device is used along with other diffusion sheets or plates, the spatial pattern could cover a smaller area (e.g., 1-20%) while, if there is no other diffusion sheets or plates used, the spatial pattern could cover a much larger area (e.g., 70-99%). Please note that the term "structure" is used to refer to an appropriate mechanism to achieve a desired function. For example, the diffuser structure could be implemented by surface roughness to the light incidence plane, or it could be implemented by a coating layer with embedded particles on the light incidence plane.

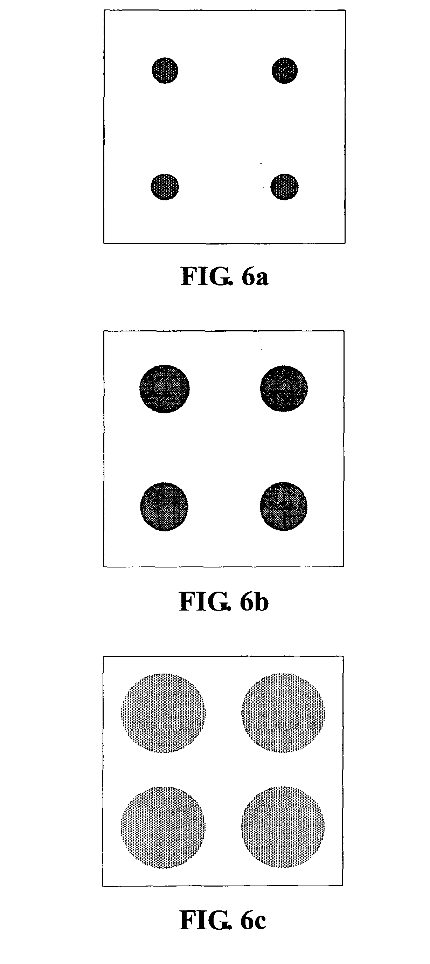

Using the light source unit of FIG 2a as example, a number of exemplary patterns of the diffuser structure 120 (as in FIGS. 5a~5e) on the light incidence plane 112 (as in FIGS. 5a~5e) are illustrated in FIGS. 6a~6e, where a darker point stands for a higher degree of haze. As should be obvious from FIGS. 6a~6e, for a position $(x, y)$ on the light incidence plane 112 (as in FIGS. 5a~5e) projected on the X-Y plane of a Cartesian coordinate system, the degree of haze of the diffuser structure 120 (as in FIGS. 5a~5e) at that position $(x, y)$ has a functional relationship $f_h$ with the intensity of the incident light at that position $(x, y)$. Examples of the function $f$ are as follows:

$$h(x, y) = c_1 \times \tilde{E}_{in\text{-}LCD}(x, y)$$

where $c_1$ is a constant for all positions $(x, y)$

$$h(x, y) = c_2 \times \tilde{E}^2_{in\text{-}LCD}(x, y)$$

where $c_2$ is a constant for all positions $(x, y)$
In contrast, for a conventional diffusion sheet, its degree of haze distribution could be described as:

$$h(x, y) = c_3$$

where $c_3$ is essentially a constant for all $(x, y)$

As shown in FIGS. 5a~5e, on the light emission plane 114 of the light control device 100, a collimator structure 130 containing a number of microstructures 132 in the micrometer (i.e., $1\sim10^3$ $\mu$m) or sub-micrometer (i.e., $1\sim10^{-2}$ $\mu$m) dimension is configured to focus the scattered light from the diffuser structure 120 into collimated light beams having an appropriate viewing angle (preferably, between 60°~120°) so as to improve the luminance of the collimated light beams. The microstructures 132 may possess different geometric properties in terms of their shapes, and the various parameters associated with the shapes. For example, the microstructures 132 could have one of the following shapes: prism, pyramid, rectangle, spherical lens, aspherical lens, lenticular lens, fresnel lens, holographic elements, etc. And, using the prism shape as an example, the geometric parameters associated with the prism shape may include: the height, vertex angle, bottom width, etc., of each prism. The subject matter of the present invention is not about geometric properties of the microstructures 132; many such techniques have already been disclosed in the related arts. What characterizes the present invention is that the collimating capability determined by the geometric properties of the microstructures 132 could be substantially uniform across the light emission plate 114, as shown in FIG 5a, or the microstructures 132 could have a spatial distribution in terms of their geometric properties corresponding to the spatial intensity distribution of the incident light on the light incidence plane 112, as shown in FIGS. 5b~5e. In other words, at positions where the light intensity is stronger, the microstructures 132 there have geometric properties different from those at positions where the light intensity is weaker. Please note that, in alternative embodiments using interactive combination, the microstructures 132 could have a spatial distribution in terms of their geometric properties corresponding to the spatial intensity distribution of the light into the microstructures 132 on the light emission plane 114, instead of on the light incidence plane 112.

In an alternative embodiment, the microstructures of the collimator structure could have substantially regular or randomly distributed geometric properties (therefore, a rather uniform distribution of collimating capability). Instead, the refractive indices (RI) of the microstructures (e.g., in the range 1.55-1.75) have a spatial distribution corresponding to the spatial intensity distribution of the incident light to the light control device (for direct combination) or to the collimator structure (for interactive combination). This could be achieved by selectively applying materials of specific refractive indices at specific positions so as to form the microstructures. Using geometric properties and using the refractive indices of the microstructures to conform to a spatial intensity distribution could be jointly or separately implemented.

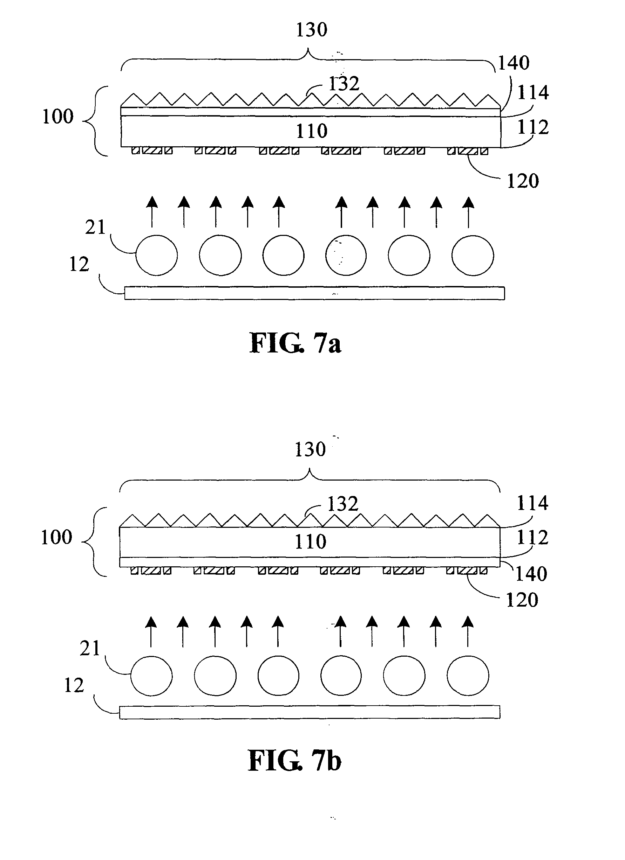

Based on the aforementioned principle of combining multiple light control functions, again using FIG. 5a as example, the light control device 100 of the present invention could further contain one ore more anti-reflection and/or polarization layers to further enhance the performance of the present invention, as illustrated in FIGS. 7a and 7b. In FIG. 7b, one or more anti-reflection and/or polarization layers 140 are interposed between the diffuser structure 120 and the substrate 110's light incidence plane 112 while, in FIG 7a, the anti-reflection and/or polarization layer 140 is interposed between the collimator stricture 130 and the substrate 110's light emission plane 114. In general, the anti-reflection and/or polarization layer 140 could be arranged anywhere along the path of light before the collimator structure 130, and is not limited to the two locations as illustrated in FIGS. 7a and 7b.

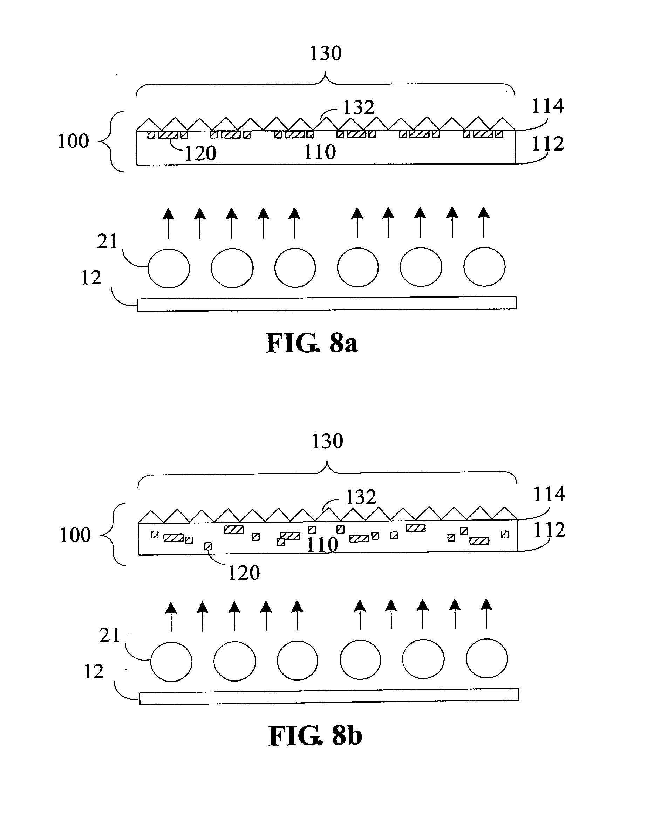

FIGS. 8a and 8b are schematic side views showing other variations of the first embodiment of the light control device of the present invention. As shown in FIG 8a, instead of being configured on the light incidence plane 112, the diffuser structure 120 is configured on the light emission plane 114, beneath the collimator structure 130. In FIG 8b, the diffuser structure 120 is implemented as diffractive elements embedded inside the substrate 110.

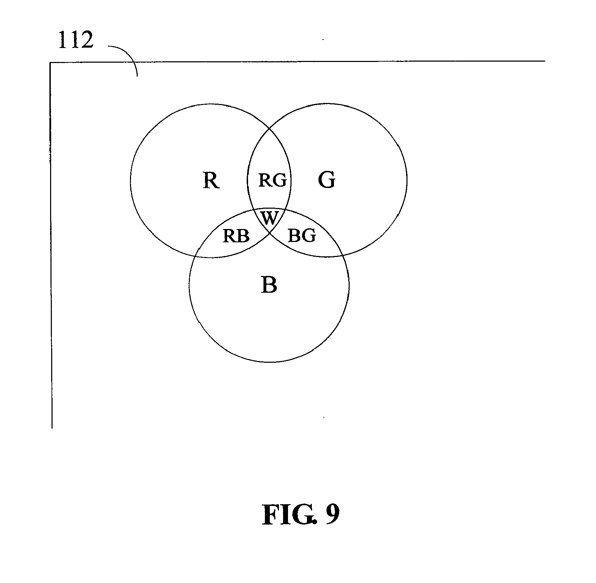

In addition to the conventional light control functions such as diffusion, collimation, polarization, and anti-reflection, the present embodiment could be extended to include color mixing function when the light source unit comprises assortments of red-light, green-light, and blue-light LEDs to achieve a desired spatial spectral distribution. FIG. 9 is a schematic view of a portion of the light incident plane where different colored areas are formed by a red-light, a green-light, and a blue-light LED. Please note that in practice a light mixing plate would have already mixed the light into the white light up to a certain extent but the residual colored light would still generate similar pattern as shown in FIG. 9. As illustrated, the area R has excessive red light while the areas G and B have excessive green and blue light respectively. On the other hand, the area W has white light while the areas RG, RB, and BG have insufficient blue, green, and red light, respectively. In other words, for a position *(x, y)* on the light incidence plane 112 of the light control device, there is a specific spectral profile associated with that position resulted from the colored LEDs used by the light source unit. For example, for a position (x, *y*) inside the area R, the spectral profile there has a significantly stronger red light than another position inside, say, the area B.

To help improve the color mixing, additives of appropriate dyes, pigments, nano/micro particles, phosphors, and/or fluorescent materials could be dispersed in the diffuser structure, collimator structure, or both. In addition, these dyes, pigments, nano/micro particles, phosphors, and/or fluorescent materials could be mixed with adequate resin and coated onto the light control device as a separate coating layer, similar to the polarization or anti-reflection layer shown in FIGS. 7a and 7b. Despite that the additives are embedded in the spatial distribution of the diffuser structure and/or the collimator structure, the distribution of the additives forms a spatial distribution corresponding to the spatial spectral distribution over an appropriate range of wavelength (or, more specifically, the visible light range) of the incident light to the light control device or to the diffuser structure and/or collimator structure containing the additives. The dyes, pigments, nano/micro particles, phosphors, and/or fluorescent materials change the spatial spectral distribution over the range of wavelength to match that of the desired spatial spectral distribution so that a better color mixing could be achieved by the light control device.

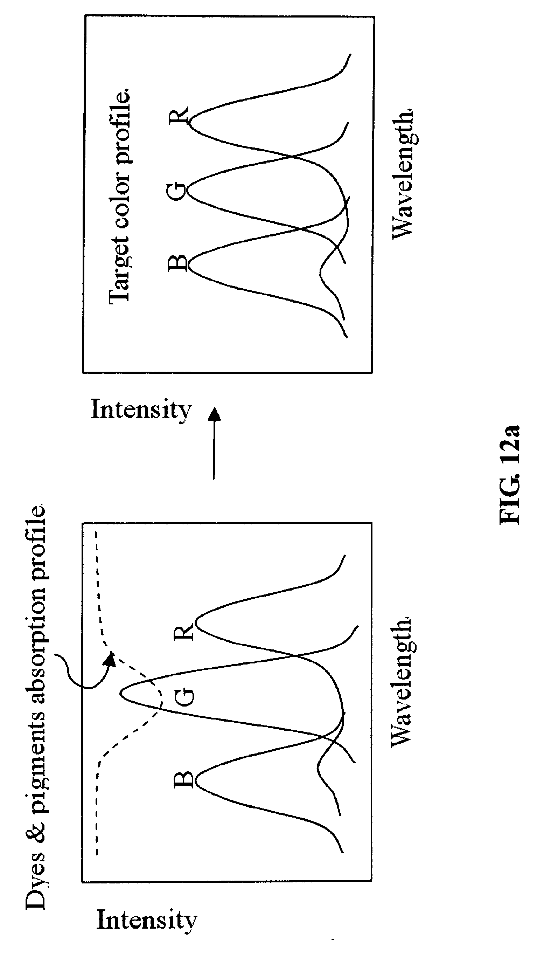

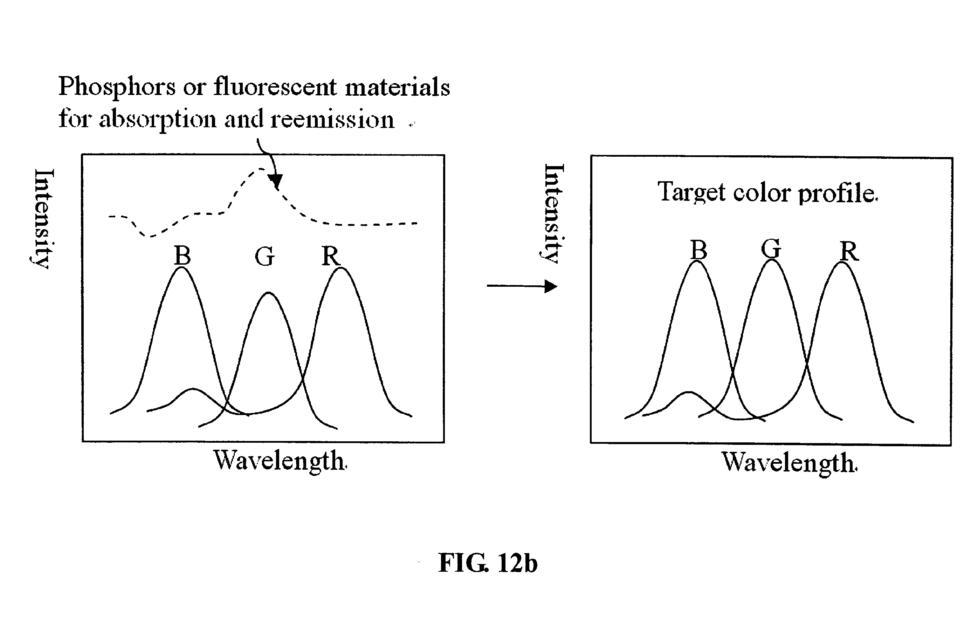

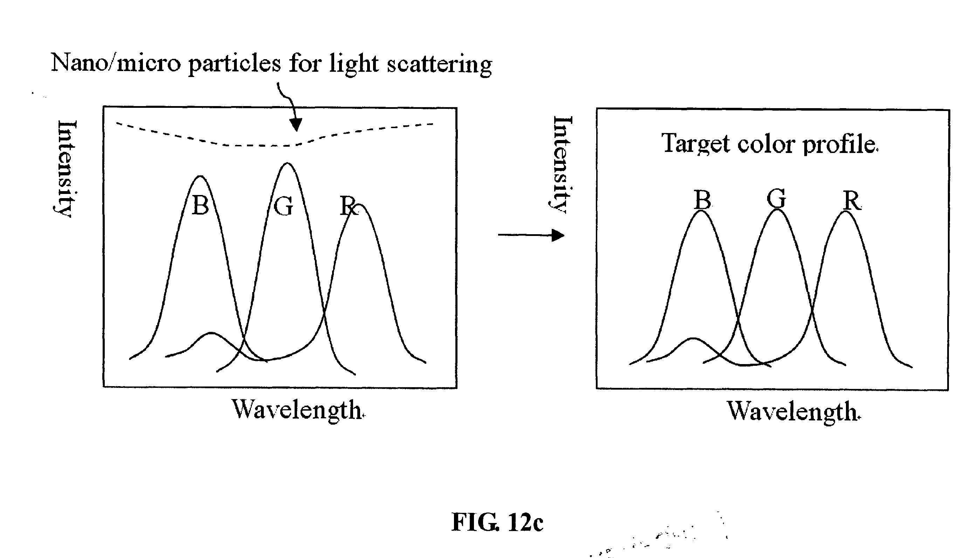

FIGS. 12a~12c are schematic diagrams showing the effects of dyes/pigments, phosphors/fluorescent materials, and nano/micro particles on various spectral profiles respectively. As illustrated in FIG 12a, the spectral profile at a position *(x, y)* is transformed into a desired spectral profile after the light absorption function provided by appropriate dyes and pigments around the position *(x, y)*, whose characteristic curve over the wavelength is denoted as a dashed line. As shown, the excessive green light (G) is suppressed. On the other hand, in FIG 12b, the insufficient green light is reinforced by the light absorption and reemission function provided by appropriate phosphors and fluorescent materials around the position *(x, y)*. Similarly, in FIG 12c, the excessive green light again is suppressed at the position *(x, y)* as it is scattered by the nano/micro particles around the position *(x, y)* to other positions.

Using FIG 9 as an example, appropriate dyes or pigments could be blended into the diffuser structure and/or collimator structure, or the resin of the separate coating layer could cover the areas R and G to absorb the excessive red and green lights. On the other hand, phosphors such as (1) Tris (dibenzoylmethane) Mono (phenanthroline) Europium Complex, or (2) Acetylacetonate Irdium Complex could be added to absorb the excessive UV (ultra violet) and/or blue light and to reemit red light in the area B. Similarly, phosphors such as (1) Coumarin Molecules, or (2) Tris (8-hydroxyquinolinolato) Metal System could be added to absorb the excessive UV and/or blue light and to reemit green light in the area B. Many such pigments, dyes, nano/micro particles, phosphors, and/or fluorescent materials have already been disclosed in the related arts and no further detail is provided here for simplicity sake.

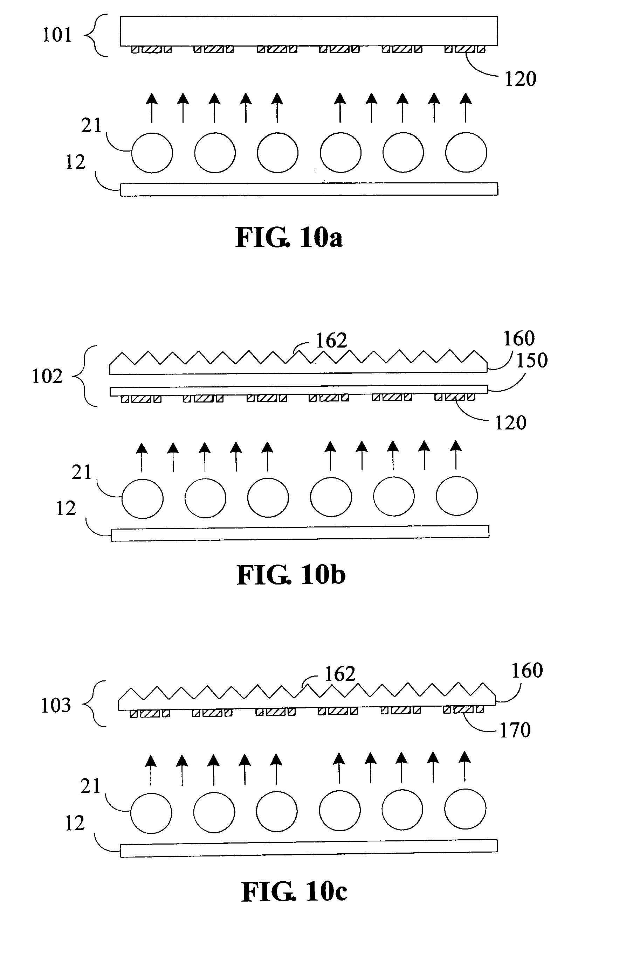

FIGS. 10a~10c are schematic side views showing other embodiments of the light control device according to the present invention. For applications in which only the uniformity of light is required, a second embodiment of the light control device 101 could have no collimator structure, as illustrated in FIG 10a. Please note that, the aforementioned variations to the first embodiment could be adopted by the present embodiment as well, if applicable. For example, the combination of the polarization and/or anti-reflection structures as illustrated in FIGS. 7a and 7b, and the different implementations of the diffuser structure shown in FIGS. 8a and 8b could all be applied to the embodiment shown in FIG 10a. In addition, appropriate dyes, pigments, nano/micro particles, phosphors, and/or fluorescent materials could be added in the diffuser structure or coated as a separate coating layer.

Instead of being implemented as a single object, a third embodiment of the light control device 102, as illustrated in FIG 10b, could be achieved by placing separate light control members together. Here, the term "member" refers to an independent constituent comprising functional structures. In this embodiment, a diffuser member 150 and a collimator member 160 are combined together. In alternative embodiments, it could be another two or more light control members integrated together. The collimator member 160 could be a commercially available conventional prism sheet (or similar brightness enhancement film) having a substantially regular or random distribution of microstructures 162, or the collimator member 160 could be tailored according to the present invention whose microstructures 162 has a spatial distribution of collimating capability provided by geometric properties and/or refractive indices of the microstructures corresponding to the spatial intensity distribution of the incident light. The diffuser member 150 could be the one shown in FIG 10a, or it could be implemented by having the diffuser structure 120 formed on a film or plate corresponding to the spatial intensity distribution of the incident light. Please note that, the aforementioned variations to the first embodiment could be adopted by the present embodiment as well, if applicable. For example, the combination of the polarization and/or anti-reflection structures as illustrated in FIGS. 7a and 7b, and the different implementations of the diffuser structure shown in FIGS. 8a and 8b could all be applied to the embodiment shown in FIG 10b. In addition, appropriate dyes, pigments, nano/micro particles, phosphors, and/or fluorescent materials could be added in the diffuser member 150 and/or the collimator member 160, or coated as a separate film or layer.

Furthermore, as illustrated in FIG 10c, a fourth embodiment of the light control device 103 is implemented by coating a light control structure to a side of a separate light control member. In this embodiment, a diffuser structure 170 just like the one of the first embodiment in FIGS. 5a~5e is coated on a side of the collimator member 160, which could be a commercial one or one according to the present invention. Again, the aforementioned variations to the collimator structure could be applied here as well. For example, the combination of the polarization and/or anti-reflection structures as illustrated in FIGS. 7a and 7b could be applied to the embodiment shown in FIG. 10c. In addition, appropriate dyes, pigments, nano/micro particles, phosphors, and/or fluorescent materials could be added in the diffuser structure 170 and/or the collimator member 160, or coated as a separate coating layer.

Using the light control device 100 of FIG 5a as an example, assuming that the color mixing structure (not shown in FIG 5a) is implemented as a separate coating layer on the light incident plane 112 and that the light control functions are directly combined, an exemplary manufacturing process of the light control device 100 could be conducted as follows. At first, a camera or a CCD device is used to capture an image of the light source unit (containing the CCFLs 21 and the reflector 12). As the light from the light source unit is directly lit on the light incidence plane 112. The image is used to derive the spatial intensity distribution of the light from the light source unit on the light incidence plane 112.

If the light source unit comprises assortments of red-light, green-light, and blue-light LEDs, the same approach is used to derive the spatial spectral distribution of the light from the light source unit on the light incidence plane 112. Usually, the spatial spectral distribution is obtained for each primary color. Then, based on the captured images and the derived spatial intensity distribution and spatial spectral distribution, various masks for the diffuser structure, collimator structure, and color mixing structure are developed, for example, using printing screen with photosensitive emulsion coating and light exposing. The substrate 100 is a transparent polymer film or plate substrate typically made of a material such as PET, PEN, PMMA, TAC, Polycarbonate, or the like. Then, an appropriate coating material is coated on the light incidence plane 112 of the substrate 110 using flat plate or roll to roll printing with appropriate mask to obtain the diffuser structure 120 whose degree of haze has a pattern similar to one of FIGs. 6a~6c. The coating material includes, but is not limited to, UV and/or thermal curable resins which contain particles or additives to scatter the light. Then appropriate dyes, pigments, nano/micro particles, phosphors, and/or fluorescent materials are blended into a proper resin and are coated also using flat plate or roll to roll printing with appropriate masks. The diffuser structure 120 and the color mixing coating layer are then solidified by thermal or ultra-violet (UV) curing. A mold for the microstructures 132 of the collimator structure 130 is prepared by machinery, lithographic, or MEMS methods. Then, resins having high refractive indices, preferably in the range of 1.55~1.75, are coated on the light emission plane 114 of the substrate 110 using flexography or micro gravure methods. The microstructures 132 of the collimator structure 130 are then formed by embossment with UV/ thermal curing.

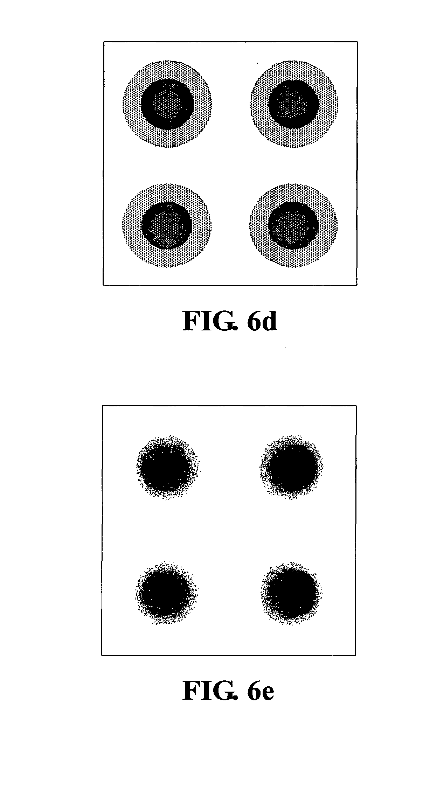

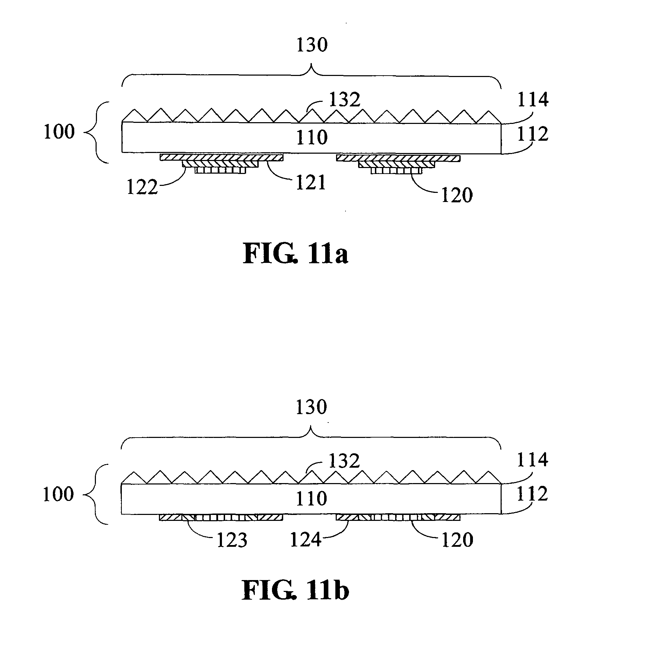

To achieve a diffuser structure 120 whose pattern is similar to the one illustrated in FIG 6d, a number of approaches could be adopted. One such approach is illustrated in FIG 11a, in which layers of coating materials 121 and 122, each having identical or different degrees of haze, are sequentially formed on the light incidence plane 112 with successive printing processes and appropriate masks. FIG. 11b illustrates another approach, in which coating materials 123 and 124 having specific degrees of haze are printed on specific areas of the light incidence plane 112 in order to obtain a pattern of FIG 6d. Similarly, a flexogravure printing process could be conducted to obtain continuously changing degree of haze, as illustrated in FIG 6e.

To explain how interactive combination is achieved, the collimating function of the light control device 100 in the previous example is assumed to be interactively combined with its preceding diffusing function. In this scenario, the diffuser structure 120 and the color mixing structure (not shown) could be formed using identical means as outlined in the previous example. Then, the semi-finished light control device 100 (i.e., with the diffuser structure and color mixing structure formed) is placed in front of the light source unit. The camera or CCD device is used again to capture an image of the light emission plane 114 of the light control device 100. The image is then used to derive the spatial intensity distribution of the light from the light source unit on the light emission plane 114. After this is done and appropriate masks are developed, the same manufacturing process could be adopted to form the collimator structure 130 as outlined in the previous example.

Please note that computer simulation would play a vital role in the manufacturing process of the present invention, especially when multiple light control functions are directly or interactively combined together and the performance of the light control device is jointly determined by these inter-related light control functions. In order to obtain an optimal configuration of these light control functions, computer simulation could save a tremendous amount of trial-and-error effort. For example, a manufacturer only needs to capture images of a light source unit and the derivation of the spatial intensity distribution and the spatial spectral distribution for each of the combined light control functions could be conducted entirely in a laboratory before really going on-line for mass production.

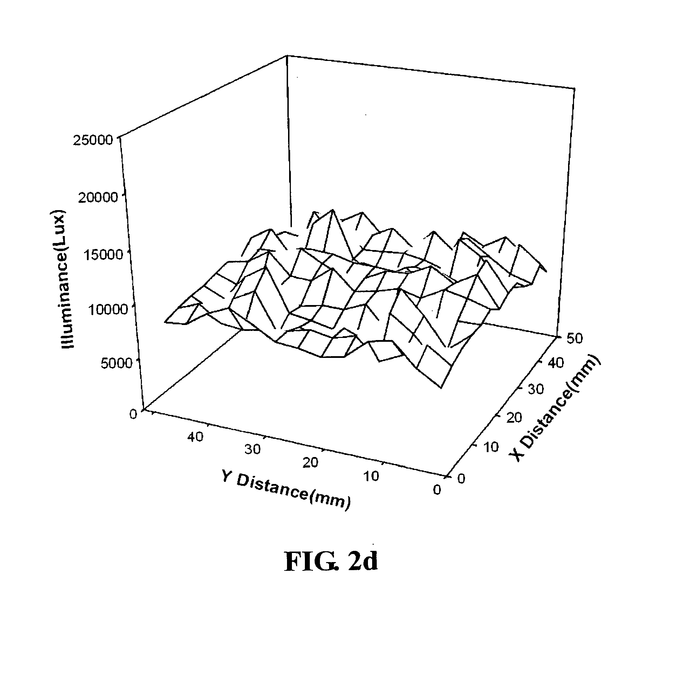

To illustrate the effect of the present invention, a number of simulations are conducted based on the light source unit of FIG 2a in a closed system where scattered light is confined for recycling. For one simulation, a light control device is as illustrated in FIG. 2c is used, in which its diffuser structure has a pattern similar to FIG 6c with an 80% degree of haze, and its collimator structure has a pattern similar to FIG. 5b. In the simulation, the illuminance (Lux) of the positions on a 50mm x 50mm surface is obtained after the light from the light source unit of FIG 2a has passed through the light control device, as shown in FIG 2d. In comparison, another simulation is conducted using a conventional brightness enhancement or prism film with regularly distributed prism structures on one side and no diffuser structure on the other side of the film. The illuminance of the positions on a 50mm x 50mm surface is obtained after the light from the light source unit has passed through the conventional prism film, as shown in FIG 2b. As can be seen from FIGS. 2b and 2d, the uniformity of the emitted light of the present invention is superior.

The spatial area of the 50mm x 50mm surface is divided into 20 x 20 grids, and the maximum, minimum, and average fluxes of illuminance are obtained from the middle 18 x 18 grids for the three simulations of FIGS. 2a (i.e., no light control device), 2b (i.e., using conventional brightness film), and 2d (i.e., using the present invention), respectively, and summarized in the following Table 1. In Table 1, the uniformity U is calculated as the ratio of the minimum and average illuminance (Glare and Uniformity in Road Lighting Installations, Publication CIE 31-1976.). Please note that the average flux can be used to represent the light power in the system. As shown, the uniformity is significantly improved from 46% to 75% after light passing through the light control device of the present invention, sacrificing only 24% of power, while the conventional prism film can only achieve 62% of uniformity with 13% of energy loss. In order for the conventional prism film to achieve the same level of uniformity, a diffuser structure is needed and considerably additional 20~30% energy loss would happen. Moreover, if additional light control devices are used together as shown in FIG 4e, highly uniform light can be easily achieved.

Table 1:

|  | Min. (Lux) | Max. (Lux) | Average (Lux) | U |
|---|---|---|---|---|
| No light control device | 5535.86 | 25225.41 | 11966.55 | 46% |
| Conventional prism film | 6525.12 | 16217.53 | 10480.43 | 62% |
| The present invention | 6791.19 | 12673.98 | 9045.51 | 75% |

In addition, the present invention could provide the following advantages. At first, if used in a backlight unit for a LCD, the cost of the backlight unit could be significantly reduced as the light guide plate, diffusion sheet, prism sheet could be omitted. Secondly, the light utilization efficiency is increased as component and material usage are reduced and therefore excessive absorption or scattering loss are prevented. Thirdly, the light control device could be fabricated using conventional processes such as roll to roll printing, silkscreen printing, lithographic, and ink-jet printing processes.

Please note that the present invention could be applied in a reversed manner in that a light source unit has its CCFLs or LEDs arranged in a pattern corresponding to the specific distribution of haze of a diffusion sheet or plate, or to the specific distribution of the refractive indices and/or geometric properties of a prism sheet, or to the specific distribution of the color mixing additives of a color mixing film, instead of the other way around as described in this specification. This type of approach should be considered to be within the scope of the present invention.

Although the present invention has been described with reference to the preferred embodiments, it will be understood that the invention is not limited to the details described thereof. Various substitutions and modifications have been suggested in the foregoing description, and others will occur to those of ordinary skill in the art. Therefore, all such substitutions and modifications are intended to be embraced within the scope of the invention as defined in the appended claims.

**Claims**

1. A light control device on a path of the light from a light source unit, comprising:

   (a) a transparent substrate having a light incidence plane and a light emission plane; and
   (b) a diffuser structure;

   wherein the light from said light source unit enters said transparent substrate through said light incidence plane, and is scattered by said diffuser structure in various directions, and exits said transparent substrate through said light emission plane; and said diffuser structure has a spatial distribution **characterized by** the degree of haze corresponding to a spatial intensity distribution of the light from said light source unit.

2. The light control device according to claim 1, wherein said spatial intensity distribution is formed by the light from said light source unit on said diffuser structure.

3. A light control device on a path of the light from a light source unit, comprising:

   (a) a transparent substrate having a light incidence plane and a light emission plane; and
   (b) a collimator structure comprising a plurality of microstructures;

   wherein the light from said light source unit enters said transparent substrate through said light incidence plane, is focused by said plurality of microstructures into substantially collimated light beams in an appropriate viewing angle, and exits said transparent substrate through said light emission plane; and said plurality of microstructures have a spatial distribution corresponding to a spatial intensity distribution of the light from said light source unit.

4. The light control device according to claim 1 or claim 3, wherein said spatial intensity distribution is formed by the light from said light source unit on said light incidence plane.

5. The light control device according to claim 3, wherein said spatial intensity distribution is formed by the light from said light source unit on said plurality of microstructures.

6. The light control device according to claim 3, wherein said spatial distribution of said plurality of microstructures is **characterized by** the geometric properties of said plurality of microstructures.

7. The light control device according to claim 3, wherein said spatial distribution of said plurality of microstructures is **characterized by** the refractive indices of said plurality of microstructures.

8. A light control device on a path of the light from a light source unit, comprising:

   (a) a transparent substrate having a light incidence plane and a light emission plane; and
   (b) a color mixing structure comprising a plurality of color mixing elements;

   wherein the light from said light source unit enters said transparent substrate through said light incidence plane, is processed by said color mixing elements to conform to a desired spatial spectral distribution, and exits said transparent substrate through said light emission plane; and said plurality of color mixing elements have a spatial distribution corresponding to a spatial spectral distribution over an appropriate range of wavelength of the light from said light source unit.

9. The light control device according to claim 8, wherein said plurality of color mixing elements provide at least one of the following color mixing functions: absorption, scattering, and absorption and reemission.

10. The light control device according to claim 8, wherein said plurality of color mixing elements are selected from at least one of the following types of color mixing elements: dyes, pigments, nano/micro particles, phosphors, and fluorescent materials.

11. The light control device according to claim 8, wherein said plurality of color mixing elements are embedded in a layer of an appropriate transparent material on said light incidence plane.

**12.** The light control device according to claim 8, wherein said plurality of color mixing elements are embedded in a layer of an appropriate transparent material on said light emission plane.

**13.** The light control device according to claim 8, wherein said plurality of color mixing elements are embedded inside said transparent substrate between said light incidence plane and said light emission plane.

**14.** The light control device according to claim 8, wherein said spatial spectral distribution is formed by the light from said light source unit on said color mixing structure.

**15.** A light control device positioned on the path of the light from a light source unit comprising:

(a) a transparent substrate having a light incidence plane and a light emission plane;
(b) a diffuser structure; and
(c) a collimator structure comprising a plurality of microstructures;

wherein the light from said light source unit enters said transparent substrate through said light incidence plane, is scattered by said diffuser structure in various directions, is focused by said plurality of microstructures into substantially collimated light beams in an appropriate viewing angle, and exits said transparent substrate through said light emission plane; and said diffuser structure has a spatial distribution **characterized by** the degree of haze corresponding to a first spatial intensity distribution of the light from said light source unit.

**16.** The light control device according to claim 1 or claim 15, wherein said diffuser structure is configured on said light incidence plane.

**17.** The light control device according to claim 1 or claim 15, wherein said diffuser structure is configured on said light emission plane.

**18.** The light control device according to claim 1 or claim 15, wherein said diffuser structure comprises a plurality of diffractive elements embedded inside said transparent substrate between said light incidence plane and said light emission plane.

**19.** The light control device according to claim 3 or claim 15, wherein said plurality of microstructures is configured on said light emission plane.

**20.** The light control device according to any one of claims 1, 3, 8 and 15, further comprising at least a polarization layer configured along the path of the light from said light source unit.

**21.** The light control device according to any one of claims 1, 3, 8 and 15, further comprising an anti-reflection layer configured along the path of the light from said light source unit.

**22.** The light control device according to claim 1 or 15, wherein said spatial distribution **characterized by** the degree of haze covers 1~99% of the surface area of said light incidence plane.

**23.** The light control device according to claim 1 or claim 15, wherein said spatial distribution **characterized by** the degree of haze has a haze variation range between 3~95%.

**24.** The light control device according to claim 15, wherein said first spatial intensity distribution is formed by the light from said light source unit on said light incidence plane.

**25.** The light control device according to claim 15, wherein said first spatial intensity distribution is formed by the light from said light source unit on said diffuser structure.

**26.** The light control device according to claim 15, wherein the geometric properties of said plurality of microstructures have a spatial distribution corresponding to a second spatial intensity distribution of the light from said light source unit.

**27.** The light control device according to claim 26, wherein said second spatial intensity distribution is formed by the light from said light source unit on said light incidence plane.

28. The light control device according to claim 26, wherein said second spatial intensity distribution is formed by the light from said light source unit on said plurality of microstructures.

29. The light control device according to claim 15, wherein the refractive indices of said plurality of microstructures have a spatial distribution corresponding to a second spatial intensity distribution of the light from said light source unit.

30. The light control device according to claim 29, wherein said second spatial intensity distribution is formed by the light from said light source unit on said light incidence plane.

31. The light control device according to claim 29, wherein said second spatial intensity distribution is formed by the light from said light source unit on said plurality of microstructures.

32. The light control device according to claim 1 or claim 15, wherein said diffuser structure is dispersed with a plurality of additives providing at least one of the following color mixing functions: absorption, scattering, and absorption and reemission.

33. The light control device according to claim 32, wherein the distribution of said plurality of additives across said diffuser structure corresponds to a spatial spectral distribution over an appropriate range of wavelength of the light from said light source unit.

34. The light control device according to claim 33, wherein said spatial spectral distribution is formed by the light from said light source unit on said diffuser structure.

35. The light control device according to claim 2 or claim 15, wherein said plurality of microstructures are dispersed with a plurality of additives providing at least one of the following color mixing functions: absorption, scattering, and absorption and reemission.

36. The light control device according to claim 32 or claim 35, wherein said plurality of additives are selected from at least one of the following types of color mixing elements: dyes, pigments, nano/micro particles, phosphors, and fluorescent materials.

37. The light control device according to claim 35, wherein the spatial distribution of said additives across said plurality of microstructures corresponds to a spatial spectral distribution over an appropriate range of wavelength of the light from said light source unit.

38. The light control device according to any one of claims 8, 33 and 37, wherein said spatial spectral distribution is formed by the light from said light source unit on said light incidence plane.

39. The light control device according to claim 36, wherein said spatial spectral distribution is formed by the light from said light source unit on said plurality of microstructures.

40

19

18

17

16

10

15

12

11    13

**FIG. 1a**

40

19

18

17

16

20

15

14

21

12

**FIG. 1b**

**FIG. 1c**

**(a)**

**(b)**

**(c)**

**FIG. 1d**

**(d)**

**FIG. 1d (cont'd)**

**FIG. 2a**

**FIG. 2b**

**FIG. 2c**

## FIG. 2d

FIG. 3a

**FIG. 3b**

**FIG. 4a**

**FIG. 4b**

40

100

15

12

11

13

## FIG. 4c

40

16

100

21

12

## FIG. 4d

**FIG. 4e**

130

132

114

100

110

112

120

21

12

**FIG. 5a**

130

132

114

100

110

112

120

21

12

**FIG. 5b**

**FIG. 5c**

**FIG. 5d**

FIG. 5e

**FIG. 6a**

**FIG. 6b**

**FIG. 6c**

FIG. 6d

FIG. 6e

FIG. 7a

FIG. 7b

FIG. 8a

FIG. 8b

**FIG. 9**

**FIG. 10a**

**FIG. 10b**

**FIG. 10c**

**FIG. 11a**

**FIG. 11b**

**FIG. 12a**

Phosphors or fluorescent materials
for absorption and reemission

Intensity

B    G    R

Wavelength.

Intensity

Target color profile.

B    G    R

Wavelength.

**FIG. 12b**

EP 1 793 263 A1

Nano/micro particles for light scattering

Target color profile.

FIG. 12c

European Patent
Office

**EUROPEAN SEARCH REPORT**

Application Number

EP 05 25 7397

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/105186 A1 (KAMINSKY CHERYL J ET AL) 19 May 2005 (2005-05-19) | 1,2,17, 18, 20-23, 32-34 | INV. G02F1/1335 |
| Y | * figures 1,2,4,5 * | 15,16, 19,24, 25,35-39 | ADD. G02F1/13357 G02B5/02 |
| | * paragraphs [0002], [0003], [0005] * * paragraphs [0032] - [0038] * * paragraphs [0048] - [0051] * * paragraphs [0104], [0105] * * paragraphs [0107], [0108] * * paragraph [0141] * * paragraphs [0174], [0177], [0178] * * table 1 * ----- | | |
| D,Y | US 6 280 063 B1 (FONG BETTIE C ET AL) 28 August 2001 (2001-08-28) | 15,16, 19,24, 25,35-39 | |
| | * column 2, line 20 - column 3, line 48; figure 1 * ----- | | TECHNICAL FIELDS SEARCHED (IPC) |
| A | US 2005/134963 A1 (STEVENSON JAMES A ET AL) 23 June 2005 (2005-06-23) * figure 1 * * paragraphs [0037], [0038] * ----- | 1,2, 15-39 | G02F |

~~The present search report has been drawn up for all claims~~

| Place of search | Date of completion of the search | Examiner |
|---|---|---|
| Munich | 19 April 2006 | Thomas, K |

EPO FORM 1503 03.82 (P04C01)

European Patent

Office

**Application Number**

EP 05 25 7397

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1, 2, 15-39

| European Patent Office | **LACK OF UNITY OF INVENTION**<br>**SHEET B** | Application Number<br>EP 05 25 7397 |
|---|---|---|

The Search Division considers that the present European patent application does not comply with the requirements of unity of invention and relates to several inventions or groups of inventions, namely:

1. claims: 1,2,15-39

> An optical diffusing element, whose haze properties are tailored spatially to the intensity distribution of the incident light onto the diffuser.
> ---

2. claims: 3-7

> An optical collimating element in which the component microstructures exhibit a spatial distribution tailored to the intensity distribution of the incident light over the diffuser.
> ---

3. claims: 8-14

> An optical colour mixing element in which a plurality of color mixing elements is arranged to have a spatial distribution corresponding to a spatial spectral distribution over an appropriate range of wavelengths of the light from said light source unit.
> ---

## ANNEX TO THE EUROPEAN SEARCH REPORT
## ON EUROPEAN PATENT APPLICATION NO.

EP 05 25 7397

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2006

| Patent document cited in search report | | Publication date | Patent family member(s) | | Publication date |
|---|---|---|---|---|---|
| US 2005105186 | A1 | 19-05-2005 | JP  2004004845 A<br>US  2003214717 A1 | | 08-01-2004<br>20-11-2003 |
| US 6280063 | B1 | 28-08-2001 | AU   735173 B2<br>AU  7370898 A<br>BR  9808760 A<br>CA  2288093 A1<br>CN  1255202 A<br>DE  69804208 D1<br>DE  69804208 T2<br>EP  0980533 A1<br>JP  2001524225 T<br>WO  9850806 A1 | | 05-07-2001<br>27-11-1998<br>11-07-2000<br>12-11-1998<br>31-05-2000<br>18-04-2002<br>18-07-2002<br>23-02-2000<br>27-11-2001<br>12-11-1998 |
| US 2005134963 | A1 | 23-06-2005 | EP  1625444 A1<br>US  2004228106 A1<br>WO  2004104679 A1 | | 15-02-2006<br>18-11-2004<br>02-12-2004 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6280063 B1
- US 6322236 B1
- US 6570710 B1
- US 6845212 B2

**Non-patent literature cited in the description**

- **BILLMEYER ; SALTZMAIN'S.** Principles of Color Technology. John Wiley & Sons Inc
- **S. HUARD.** Polarization of Light. John Wiley & Sons, 1997